# EUROPEAN PATENT APPLICATION

(11) **EP 0 963 695 A1**
(43) Date of publication of application: **15.12.1999**
(21) Application number: 99110709.5
(22) Date of filing: 04.06.1999
(51) Int. Cl.: A01N 47/02, A01N 43/56

(54) **Insecticidal method**

(30) Priority: 08.06.1998 US 88461 P
(71) Applicant: Rhone Poulenc Agro, 69009 Lyon (FR)
(72) Inventor: Huber, Scot Kevin, Raleigh, NC 27615 (US)
(74) Representative: Brachotte, Charles

(57) **Abstract**

A method of control of fleas by applying a 1-arylpyrazole of formula (I) to a locus where the fleas are located or expected to be located.

## Description

The present invention relates to a new insecticidal method.

It is well-known to kill insects by means of pyrazole derivatives with insecticidal properties, see *inter alia* European Patent Publication EP295117 and US Patent 5,242,940.

It has also been disclosed to use SF₅-phenylpyrazoles against insects connected with public health and resistant to lindane or dieldrin. See International Patent Publications WO 93/6089 and WO 94/21606.

An object of the present invention is to provide a new method of control of fleas which is highly effective.

Another object of the present invention is to provide a method of cleaning animals or animal hair or skin which are or might be infested by fleas.

Another object of the present invention is to provide a method of control of fleas which are not resistant to the insecticides lindane or dieldrin.

These objects are met in whole or in part by the present invention.

The present invention provides a method of control of fleas by applying a 1-arylpyrazole of formula (I) to a locus where the fleas are located or expected to be located, the 1-arypyrazole being 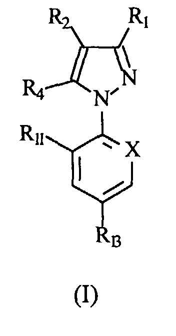 wherein:
R₁ is CN or methyl;
R₂ is S(O)ₙR₃;
R₃ is alkyl or haloalkyl;
R₄ is selected from the group comprising a hydrogen atom, a halogen atom, and a radical which may be -NR₅R₆, -C(O)R₇, C(O)OR₇, -S(O)ₘR₇, alkyl, haloalkyl, -OR₈, or -N=C(R₉)(R₁₀);
R₅ and R₆ are independently selected from a hydrogen atom, alkyl, haloalkyl, -C(O)R₇, C(O)OR₇, -S(O)ᵣCF₃;
R₇ is selected from alkyl or haloalkyl;
R₈ is selected from alkyl, haloalkyl or the hydrogen atom;
R₉ is selected from the hydrogen atom and alkyl;
R₁₀ selected from phenyl or heteroaryl that is optionally substituted by one or more hydroxy, a halogen atom, -O-alkyl, -S-alkyl, cyano, or alkyl or combinations thereof;
X is selected from the Nitrogen atom and the radical C-R₁₂;
R₁₁ and R₁₂ are independently selected from a halogen atom or the hydrogen atom
R₁₃ is -SF₅;
m, n, and r are independently selected from 0,1, and 2.

The alkyl and alkoxy groups of the formula (I) are preferably lower alkyl and alkoxy groups, that is, radicals having one to four carbon atoms. The haloalkyl and haloalkoxy groups likewise preferably have one to four carbon atoms. The haloalkyl and haloalkoxy groups can bear one or more halogen atoms; preferred groups of this type include -CF₃ and -OCF₃.

A preferred group 1-arylpyrazoles for use in the present invention are those of formula (I) having one or more of the following features wherein:
R₁ is CN;
R₄ is -NR₅R₆;
R₅ and R₆ are independently selected from the hydrogen atom, alkyl, haloalkyl, -C(O)R₇, C(O)OR₇; or
X is C-R₁₂.

A particularly preferred group of 1-arylpyrazoles for use in the present invention is that wherein:
R₁ is CN;
R₄ is -NR₅R₆;
R₅ and R₆ are independently selected from the hydrogen atom, alkyl, haloalkyl, -C(O)R₇, C(O)OR₇;and
X is C-R₁₂.

It is preferred that R₄ is amino.

Specific 1-arylpyrazoles which are preferred include 5-amino-3-cyano-1-(2,6-dichloro-4-pentafluorosulphenylphenyl)-4-trifluoromethylsulfinylpyrazole, herein referred to as Compound A; 5-amino-3-cyano-1-(2,6-dichloro-4-pentafluorosulphenylphenyl)-4-trifluoromethylsulfenylpyrazole, herein referred to as Compound B; and 5-amino-3-cyano-1-(2,6-dichloro-4-pentafluorosulphenylphenyl)-4-trifluoromethylsulfonylpyrazole, herein referred to as Compound C.

The locus is preferably a dog or a cat, or the hair or the skin thereof. The arylpyrazole is preferably administered dermal application, by injection or by oral administration of a bolus or a pill. Dermal administration is preferred, more preferably the so-called spot-on method whereby a small amount to of liquid formulation is applied; the application being advantageously made such that the animal cannot reach the place of application with its limbs or tongue, the place being preferably the area between its forward legs and on its back between the shoulder blades.

The dose of the arylpyrazole is of from 0.15 mg to 30 mg per kg of body weight of the treated animal, preferably from 0.6 to 15 mg/kg, most preferably from 1.2 to 10 mg/kg.

Compositions for oral administration comprise the active ingredient in association with pharmaceutically acceptable carriers or coatings and include, for example, tablets, pills, capsules, gels, drenches, medicated feeds, medicated drinking water, medicated dietary supplements, slow-release boluses or other slow-release devices intended to be retained within the gastro-intestinal tract. Any of these may incorporate the active ingredients contained within microcapsules or coated with acid-labile or alkali-labile or other pharmaceutically acceptable enteric coatings. Feed premixes or concentrates containing compounds of the present invention for use in preparation of medicated diets, drinking water or other materials for consumption by animals may also be used.

For oral administration, generally the arylpyrazole of formula (I) is administered to an animal at a rate from 0.1 to 100 mg/kg, preferably from 0.5 to 50 mg/kg and most preferably from 1 to 30 mg/kg.

The present invention also relates to a use of a 1-arylpyrazole of formula (I) as hereinbefore defined to manufacture a composition for the control of parasites, particularly fleas, in or on an animal.

The present invention also relates to a method of cleaning animals in good health comprising the application to the animal of a 1-arylpyrazole of formula (I) or a composition comprising the 1-arylpyrazole to the animal.

The method of cleaning an animal is not a method of treatment of the animal body per se, because
(a) the animal is in good health and requires no substantial treatment to correct a deficiency of health;
(b) the cleaning of the animal is not intended to be done by veterinary personnel, but by persons interested in the cleaning of the animal; and
(c) the purpose of such cleaning is to avoid unpleasant conditions for humans and the environment in which humans inhabit so as to not infest the said humans with arthropods carried by the animal.

The present invention also provides the use of a composition comprising the 1-arylpyrazole as described *supra* as an active veterinary substance.

The arylpyrazole is most advantageously administered by use of composition known to those skilled in the art.

The following non-limiting example provides an illustration of the way the invention may be worked.

### Example 1

Compound A, B, and C are dissolved in dimethylsulfoxide and diluted in cow blood to give a series of concentration of compounds A, B and C. The solutions are placed in tubes which are sealed at one end with PARAFILM® membrane. The PARAFILM® end of the tube is abutted against a cage which contains about 10 cat fleas. Fleas are allowed to feed through the PARAFILM®. The blood solutions are changed daily. Mortality is assessed after three days. Compounds A, B and C are substantially more effective than the prior art compounds.

### Example 2:

Compounds A, B and C are formulated as a 60 mg/mL formulations in a 1:1 volume/volume solution of dimethyl sulfoxide and corn oil. Using this formulation, mixed breed dogs and cats are treated at a rate of 10 mg of the compound per kg of body weight of the animal treated.

All animals are infested with cat fleas (Ctenocephalides felis) 1 day prior to administration of the compound. At 8, 15, 22 and 29 days after treatment the animals are re-infested with fleas. At 1, 9, 16, and 30 days after treatment the control of fleas and ticks is determined versus an untreated control dog. Immediately after the determination of efficacy all arthropods are removed from the animals.

Compounds A, B and C are substantially more active than prior art compounds.

## Claims

1. A method of control of fleas by applying a 1-arylpyrazole of formula (I) to a locus where the fleas are located or expected to be located, the 1-arypyrazole being: 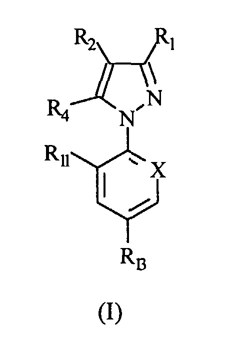 wherein:
R₁ is CN or methyl;
R₂ is S(O)ₙR₃;
R₃ is alkyl or haloalkyl;
R₄ is selected from the group comprising a hydrogen atom, a halogen atom, and a radical which may be -NR₅R₆, C(O)R₇, C(O)OR₇, -S(O)ₘR₇, alkyl, haloalkyl, -OR₈, or -N=C(R₉)(R₁₀);
R₅ and R₆ are independently selected from a hydrogen atom, alkyl, haloalkyl, -C(O)R₇, C(O)OR₇, S(O)ᵣCF₃;
R₇ is selected from alkyl or haloalkyl;
R₈ is selected from alkyl, haloalkyl or the hydrogen atom;
R₉ is selected from the hydrogen atom and alkyl;
R₁₀ selected from phenyl or heteroaryl that is optionally substituted by one or more hydroxy, a halogen atom, -O-alkyl, -S-alkyl, cyano, or alkyl or combinations thereof;
X is selected from the Nitrogen atom and the radical C-R₁₂;
R₁₁ and R₁₂ are independently selected from a halogen atom or the hydrogen atom;
R₁₃ is -SF₅;
m, n, and r are independently selected from 0,1, and 2.

2. The method of claim 1 wherein the locus is a dog or a cat

3. The method of claim 1 or claim 2 wherein the locus is the hair or skin of a dog or a cat.

4. The method of claim 1 wherein the arylpyrazole is administered by injection.

5. The method of any one of the foregoing claims wherein the 1-arylpyrazole is is 5-amino-3-cyano-1-(2,6-dichloro-4-pentafluorosulphenylphenyl)-4-trifluoromethylsulfinylpyrazole; 5-amino-3-cyano-1-(2,6-dichloro-4-pentafluorosulphenylphenyl)-4-trifluoromethylsulfenylpyrazole; or 5-amino-3-cyano-1-(2,6-dichloro-4-pentafluorosulphenylphenyl)-4-trifluoromethylsulfonylpyrazole.

6. The method of Claim 1 or Claim 2 wherein the arylpyrazole or the composition comprising it is applied orally.

7. The method according to Claim 6 wherein the arylpyrazole is administered at a rate from 0.1 to 100 mg/kg.
